# FASCICULE DE BREVET EUROPEEN

(11) **EP 2 746 115 B1**
(45) Date de publication et mention de la délivrance du brevet: **03.06.2015**
(21) Numéro de dépôt: 12199260.6
(22) Date de dépôt: 21.12.2012
(51) Int. Cl.: B60R 25/021

(54) **Actionneur de contact pour véhicule**
Kontaktschütz für Fahrzeug
Contact actuator for a vehicle

(43) Date de publication de la demande: 25.06.2014
(73) Titulaire: U-Shin France SAS, 94046 Créteil Cedex (FR)
(72) Inventeur: Della Fiorentina, Alix, 58000 Nevers (FR); Poggi, Patrice, 58000 Nevers (FR)
(74) Mandataire: Larger, Solène

(56) Documents cités:
- EP-A1- 1 127 758

## Description

La présente invention concerne un actionneur de contact pour véhicule automobile.

Le document EP 1 127 758 A1 décrit un exemple d'actionneur de contact pour véhicule automobile de l'art antérieur. Il est connu d'utiliser un actionneur de contact pour véhicule automobile du type comportant :
- un boîtier,
- un barillet destiné à pivoter autour d'un axe A1 par rapport au boîtier,
- une tirette destinée à se déplacer entre une position de verrouillage d'une colonne de direction et une position de déverrouillage de la colonne de direction, et
- une poignée comportant :
   ∘ une tige s'étendant selon l'axe A1, insérée dans le barillet par une première extrémité et destiné à coulisser dans ce dernier entre une position avancée dans laquelle la tige provoque la possibilité pour la tirette de passer de sa position de déverrouillage à sa position de verrouillage, et une position reculée dans laquelle la tige provoque l'empêchement pour la tirette de passer de sa position de déverrouillage à sa position de verrouillage, la tige étant solidaire du barillet en rotation autour de l'axe A1, et
   ∘ une tête fixée à une seconde extrémité de la tige, par laquelle la poignée est destinée à être saisie et manipulée.

Dans cet actionneur de contact connu, la poignée est une clé de contact destinée à être retirée pour que l'utilisateur l'emporte avec lui. Le barillet est en outre muni de paillette empêchant sa rotation tant que la clé de contact munie du bon codage n'est pas complètement insérée. Ainsi, la clé est bloquée en rotation par le barillet tant qu'elle n'a pas atteint sa position reculée.

Or, il est dans certains cas souhaitable de munir, d'une manière simple, le véhicule automobile d'une clé inamovible, par exemple pour les véhicules automobiles de location. Dans ce cas, un codage de la clé est inutile. Cependant, il est tout de même souhaitable de garder le blocage en rotation de la clé tant qu'elle n'a pas atteint sa position reculée.

Afin de répondre au moins en partie à cette problématique, il est proposé un actionneur de contact du type précité, caractérisé en ce que le boîtier définit un espace intérieur dans lequel la tige s'étend, et présente, dans cet espace intérieur, une rainure longitudinale parallèle à l'axe A1, et en ce que la tige présente un ergot destiné à se déplacer dans la rainure longitudinale lorsque la tige se déplace entre sa position avancée et sa position reculée, la rainure longitudinale bloquant circonférentiellement l'ergot de la tige de manière à empêcher la rotation de la poignée autour de l'axe A1.

De manière optionnelle, le boîtier présente en outre, dans l'espace intérieur, une rainure circonférentielle autour de l'axe A1 croisant la rainure longitudinale, dans laquelle l'ergot de la tige est destiné à se déplacer lorsque la tige, une fois arrivée à sa position reculée, est tournée autour de l'axe A1, la rainure circonférentielle bloquant longitudinalement l'ergot de la tige de manière à empêcher le déplacement de la tige le long de l'axe A1.

De manière optionnelle également, la tige présente une rainure inclinée par rapport à l'axe A1 et ménagée dans la tige, et l'actionneur de contact comporte en outre un palpeur monté sur le barillet pivotant autour d'un axe A3, le palpeur présentant un pion inséré dans la rainure inclinée, de manière à faire pivoter le palpeur entre une première position dans laquelle le palpeur permet à la tirette de se déplacer depuis sa position de déverrouillage vers sa position de verrouillage et une seconde position dans laquelle le palpeur empêche la tirette de se déplacer depuis sa position de déverrouillage vers sa position de verrouillage, lorsque la tige coulisse entre sa position avancée et sa position reculée.

De manière optionnelle également, la tige présente une portion élargie dans laquelle la rainure inclinée est ménagée.

De manière optionnelle également, la portion élargie présente un méplat dans lequel la rainure inclinée est ménagée.

De manière optionnelle également, le boîtier présente une face avant, la tige présente une première extrémité insérée dans le boîtier au travers de la face avant et une seconde extrémité dépassant par l'avant de la face avant, à laquelle la tête est fixée, et l'actionneur de contact comporte en outre une butée empêchant la sortie hors du boîtier de la tige par l'avant

Un exemple de réalisation de l'invention va à présent être décrit, en référence aux dessins annexes, parmi lesquels :
- la figure 1 est une vue en trois dimensions d'un actionneur de contact pour véhicule automobile ;
- la figure 2 est une vue en trois dimensions de l'actionneur de la figure 1, avec un boîtier retiré ;
- la figure 3 est une vue en trois dimensions de l'intérieur du boîtier ; et
- la figure 4 est une vue en trois dimensions d'une partie de l'actionneur.

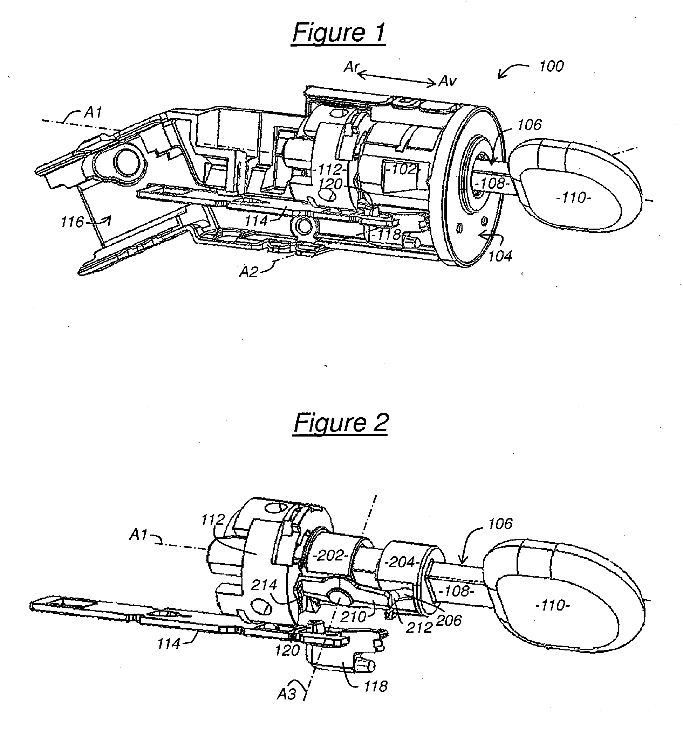

En référence à la figure 1, un actionneur de contact pour véhicule automobile 100 va à présent être décrit.

L'actionneur 100 comporte tout d'abord un boîtier 102 présentant une face extérieure 104 destinée être orientée vers un habitacle du véhicule automobile.

L'actionneur 100 comporte en outre une poignée 106 en forme de clé. La poignée 106 comporte tout d'abord une tige 108 s'étendant selon un axe A1 et insérée en partie dans le boîtier 102 par sa face extérieure 104. L'axe A1 définit une direction avant-arrière Av-Ar, l'avant étant dans le sens de la face extérieure 104, appelée par la suite face avant 104. La tige 108 présente ainsi une extrémité avant dépassant de la face avant 104 du boîtier 102, à laquelle une tête aplatie 110 est fixée. La poignée 106 est destinée à être saisie et manipulée par cette tête 110.

L'actionneur 100 comporte en outre un arbre à cames 112 située à l'arrière du boîtier 102 dans la continuité de l'axe A1. L'arbre à cames 112 est destiné à pivoter autour de l'axe A1 par rapport au boîtier 102.

L'actionneur 100 comporte en outre une tirette 114 s'étendant le long de l'axe A1 et destinée à coulisser parallèlement à cet axe A1 par rapport au boîtier 102, entre une position arrière de verrouillage d'une colonne de direction et une position avant de déverrouillage de la colonne de direction. Cette colonne de direction n'est pas représentée sur les figures, mais s'étend dans un logement 116, dans lequel la tirette 114 pénètre en position de verrouillage et duquel la tirette 114 est dégagée en position de déverrouillage.

L'actionneur 100 comporte en outre une bascule 118 montée sur la tirette 114 de manière pivotante selon un axe A2 orthogonal à l'axe A1. La bascule 118 présente un doigt 120 s'étendant vers l'axe A1.

En référence à la figure 2, l'actionneur 100 comporte en outre un barillet 202 de forme cylindrique centrée sur l'axe A1. Le barillet 302 est destiné à pivoter autour de l'axe A1 par rapport au boîtier 102 et solidaire de l'arbre à cames 112 en rotation autour de l'axe A1 de manière à entraîner ce dernier. Le barillet 202 présente une ouverture dans laquelle une extrémité arrière de la tige 108 est insérée. La tige 108 est destinée à coulisser dans le barillet 202 tout en étant solidaire de ce dernier en rotation autour de l'axe A1 de manière à entraîner le barillet 202 en rotation. La tige 108 présente une portion élargie 204 située à l'avant du barillet 202, de forme cylindrique avec un méplat latéral et de diamètre correspondant à celui du barillet 202 de manière à être dans la continuité de ce dernier. Une rainure 206 inclinée par rapport à l'axe A1 est ménagée dans le méplat de la portion élargie 204. En outre, la tige 108 présente un ergot 208 se projetant radialement depuis la portion cylindrique 304. Dans l'exemple décrit, l'ergot 208 a la forme d'une nervure circonférentielle s'étendant sur la portion cylindrique 304.

L'actionneur 100 comporte en outre un palpeur 210 monté sur le barillet 202 de manière pivotante autour d'un axe A3 transverse à l'axe A1. Le palpeur 210 a une forme allongée et est monté pivotant dans sa partie centrale. Le palpeur 210 présente, à une extrémité, un pion 212 inséré dans la rainure inclinée 206 de la poignée 106 et, à une autre extrémité, un ergot 214.

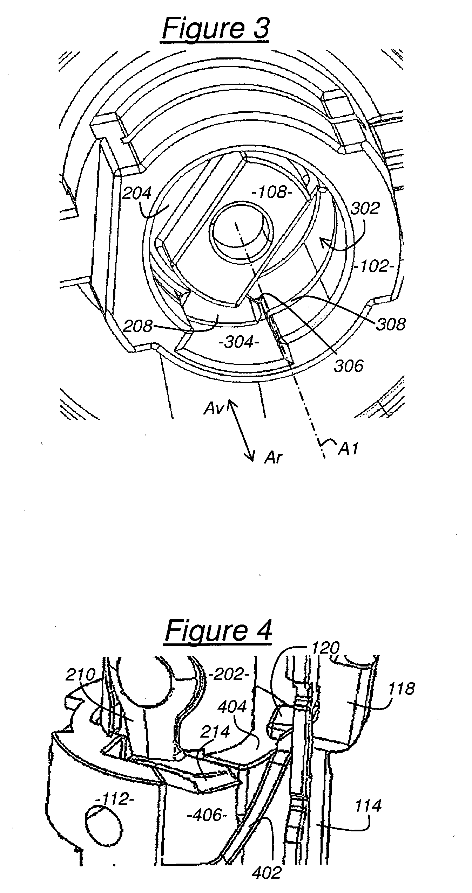

En référence à la figure 3, le boîtier 102 définit un espace intérieur cylindrique 302 dans lequel la tige 108, et en particulier la portion élargie 204 s'étend. Le boitier 102 présente, dans cet espace intérieur 302, une rainure longitudinale 304 parallèle à l'axe A1 et présentant un bord avant 306. Le boîtier 102 présente en outre, toujours dans l'espace intérieur 302, une rainure circonférentielle 308 s'étendant autour de l'axe A1 et croisant la rainure longitudinale 304. L'ergot 208 est destiné à successivement avancer dans les rainures 304 et 308, comme cela sera expliqué par la suite.

En référence à la figure 4, l'arbre à cames 112 présente une rampe 402 s'étendant hélicoïdalement autour de l'axe A1, et un palier 404 auquel se termine la rampe 402, le palier 404 bordant en partie la rampe 402 du côté de l'axe A1. L'arbre à cames 112 est en outre muni d'une rainure longitudinale de retour 406 reliant le palier 404 au bas de la rampe 402.

Le fonctionnement de l'actionneur 100 va à présent être décrit.

Au départ, la poignée 106 est dans une position avancée vers l'habitacle du véhicule. La tige 108 de la poignée 106 ne peut pas être sortie hors du boîtier 102 par l'avant car l'ergot 208 de la poignée 106 bute contre le bord avant 306 de la rainure longitudinale 304 du boîtier 102, comme cela est visible sur la figure 3.

En outre, la rainure longitudinale 304 empêche un déplacement circonférentiel de l'ergot 208, et donc la rotation de la poignée 106. La tirette 114 est dans sa position arrière de verrouillage de la colonne de direction. La bascule 118 est dans une position dégagée, de sorte que son doigt 120 repose sur le bas de la rampe 402. Le palpeur 210 est également dans une position dégagée dans laquelle son ergot 214 est dégagé de la rainure de retour 406.

L'utilisateur pousse alors sur la poignée 106 de manière à la faire coulisser vers l'arrière jusqu'à une position reculée. L'ergot 208 de la poignée 106 avance alors dans la rainure longitudinale 304 du boîtier 102, cette dernière empêchant un déplacement circonférentiel de l'ergot 208, et donc la rotation de la poignée 106. Lors de ce coulissement, le pion 212 du palpeur 210 est entrainé par la rainure 206 de manière à faire pivoter le palpeur 210 jusqu'à ce que son ergot 214 obstrue la rainure de retour 406, tel que cela est représenté sur la figure 4.

L'utilisateur tourne alors la poignée 106 jusqu'à une position tournée. L'ergot 208 de la poignée 106 se déplace alors dans la rainure circonférentielle 308 du boîtier 102, cette dernière empêchant le coulissement en avant ou en arrière de la tige 108, et donc de la poignée 106. La tige 108 entraine en rotation l'ensemble du barillet 202 et de l'arbre à cames 112. Lors de la rotation de l'arbre à cames 112, le doigt 120 de la bascule 118 glisse sur la rampe 402 et entraine la tirette 114 vers l'avant jusqu'à ce que cette dernière atteigne une position de déverrouillage de la colonne de direction. Le doigt 120 de la bascule 118 atteint alors le palier 404. Des moyens de rappel (non représentés) déplacent alors la bascule 118 dans une position basculée (illustrée sur la figure 4) telle que, lorsque l'utilisateur tourne à nouveau la poignée 106 de manière à entraîner le barillet 202 et l'arbre à cames 112, le doigt 120 de la bascule 118 glisse non sur la rampe 402, mais sur le palier 404 à côté de la rampe 402 et sur l'ergot 214 du palpeur 210 obstruant la rainure de retour 406. Ainsi, l'ergot 214 du palpeur 210 empêche le doigt 120 de la bascule 118 d'emprunter la rainure de retour 406 qui aurait permis à la tirette 114 de retourner en position arrière de verrouillage de la colonne de direction.

L'utilisateur ramène alors la rainure 206 de la tige 108 en position non tournée, c'est-à-dire de sorte que l'ergot 208 de la tige 108 se trouve dans la rainure longitudinale 304 du boîtier 102. Dans cette position, le doigt 120 de la bascule 118 est en butée contre l'ergot 214 du palpeur 210 qui l'empêche d'emprunter la rainure de retour 406.

L'utilisateur tire alors la poignée 106 vers l'avant pour l'amener de la position reculée jusqu'à la position avancée. Lors du coulissement, la rainure inclinée 206 de la tige 108 déplace le pion 212 du palpeur 210 de manière à faire pivoter le palpeur 210 de sorte que l'ergot 214 du palpeur 210 se dégage de la rainure de retour 406. Le doigt 120 de la bascule 118 n'étant plus bloqué, le doigt 120 avance dans la rainure de retour jusqu'à atteindre le bas de la rampe 402, la tirette 114 retourne en position arrière de verrouillage de la colonne de direction et la bascule 118 retourne en position dégagée.

L'invention n'est pas limitée à l'exemple de réalisation précédemment décrit, mais au contraire définie par les revendications annexées, dont la portée s'étend à toutes les modifications et configurations alternatives pouvant être conçues à partir des connaissances générales de l'homme du métier.

## Revendications

1. Actionneur de contact pour véhicule automobile (100), comportant :
- un boîtier (102),
- un barillet (202) destiné à pivoter autour d'un axe A1 par rapport au boîtier (102),
- une tirette (114) destinée à se déplacer entre une position de verrouillage d'une colonne de direction et une position de déverrouillage de la colonne de direction, et
- une poignée (106) comportant :
- une tige (108) s'étendant selon l'axe A1, insérée dans le barillet (202) par une première extrémité et destiné à coulisser dans ce dernier entre une position avancée dans laquelle la tige (108) provoque la possibilité pour la tirette (114) de passer de sa position de déverrouillage à sa position de verrouillage, et une position reculée dans laquelle la tige (108) provoque l'empêchement pour la tirette (114) de passer de sa position de déverrouillage à sa position de verrouillage, la tige (108) étant solidaire du barillet (202) en rotation autour de l'axe A1, et
- une tête (110) fixée à une seconde extrémité de la tige (108), par laquelle la poignée (106) est destinée à être saisie et manipulée, et
l'actionneur de contact (100) étant **caractérisé en ce que** le boîtier (102) définit un espace intérieur (302) dans lequel la tige (108) s'étend, et présente, dans cet espace intérieur (302), une rainure longitudinale (304) parallèle à l'axe A1, et **en ce que** la tige (108) présente un ergot (208) destiné à se déplacer dans la rainure longitudinale (304) lorsque la tige (108) se déplace entre sa position avancée et sa position reculée, la rainure longitudinale (304) bloquant circonférentiellement l'ergot (208) de la tige (108) de manière à empêcher la rotation de la poignée autour de l'axe A1.

2. Actionneur de contact (100) selon la revendication 1, dans lequel le boîtier (102) présente en outre, dans l'espace intérieur (302), une rainure circonférentielle (308) autour de l'axe A1 croisant la rainure longitudinale (304), dans laquelle l'ergot (208) de la tige (108) est destiné à se déplacer lorsque la tige (108), une fois arrivée à sa position reculée, est tournée autour de l'axe A1, la rainure circonférentielle (308) bloquant longitudinalement l'ergot (208) de la tige (108) de manière à empêcher le déplacement de la tige (108) le long de l'axe A1.

3. Actionneur de contact (100) selon la revendication 1 ou 2, dans lequel la tige présente :
- une rainure (206) inclinée par rapport à l'axe A1 et ménagée dans la tige (108), et
et comportant en outre :
- un palpeur (210) monté sur le barillet (202) pivotant autour d'un axe A3, le palpeur (210) présentant un pion (212) inséré dans la rainure inclinée (206), de manière à faire pivoter le palpeur (210) entre une première position dans laquelle le palpeur (210) permet à la tirette (114) de se déplacer depuis sa position de déverrouillage vers sa position de verrouillage et une seconde position dans laquelle le palpeur (210) empêche la tirette (114) de se déplacer depuis sa position de déverrouillage vers sa position de verrouillage, lorsque la tige (108) coulisse entre sa position avancée et sa position reculée.

4. Actionneur de contact (100) selon la revendication 3, dans lequel la tige (108) présente une portion élargie (204) dans laquelle la rainure inclinée (206) est ménagée.

5. Actionneur de contact (100) selon la revendication 4, dans lequel la portion élargie (204) présente un méplat dans lequel la rainure inclinée (206) est ménagée.

6. Actionneur de contact (100) selon l'une quelconque des revendications 1 à 5, dans lequel le boîtier (102) présente une face avant (104), dans lequel la tige (108) présente une première extrémité insérée dans le boîtier (102) au travers de la face avant (104) et une seconde extrémité dépassant par l'avant de la face avant (104), à laquelle la tête (110) est fixée, et comportant en outre :
- une butée (306) empêchant la sortie hors du boîtier (102) de la tige (108) par l'avant.

## Patentansprüche

1. Kontaktschütz für Kraftfahrzeug (100), umfassend:
- ein Gehäuse (102),
- einen Schließzylinder (202), der ausgelegt ist, um sich um eine Achse A1 mit Bezug auf das Gehäuse (102) zu drehen,
- einen Zugmechanismus (114), der ausgelegt ist, um sich zwischen einer Verriegelungsposition einer Lenksäule und einer Entriegelungsposition der Lenksäule zu bewegen, und
- einen Griff (106), umfassend:
- einen Stift (108), der sich entlang der Achse A1 erstreckt, eingeführt in den Schließzylinder (202) durch ein erstes Ende und ausgelegt, um in diesem Letzteren zwischen einer vorgerückten Position, in der der Stift (108) die Möglichkeit für den Zugmechanismus (114) bereitstellt, aus seiner Entriegelungsposition in seine Verriegelungsposition überzugehen, und einer zurückgezogenen Position zu gleiten, in der der Stift (108) die Blockierung für den Zugmechanismus (114) verursacht, von seiner Entriegelungsposition in seine Verriegelungsposition überzugehen, wobei der Stift (108) mit dem Schließzylinder (202) in Drehung um die Achse A1 fest verbunden ist, und
- einen Kopf (110), der an ein zweites Ende des Stifts (108) befestigt ist, wodurch der Griff (106) ausgelegt ist, um gegriffen und gehandhabt zu werden, und
wobei der Kontaktschütz (100) **dadurch gekennzeichnet ist, dass** das Gehäuse (102) einen inneren Raum (302) definiert, in dem sich der Stift (108) erstreckt, und in diesem inneren Raum (302) eine Längsnut (304) aufweist, die parallel zur Achse A1 ist, und dadurch, dass der Stift (108) einen Vorsprung (208) aufweist, der ausgelegt ist, um sich in der Längsnut (304) zu bewegen, wenn sich der Stift (108) zwischen seiner vorgerückten und seiner zurückgezogenen Position verschiebt, wobei die Längsnut (304) umfänglich den Vorsprung (208) des Stifts (108) blockiert, um die Drehung des Griffs um die Achse A1 zu verhindern.

2. Kontaktschütz (100) nach Anspruch 1, wobei das Gehäuse (102) außerdem, im inneren Raum (302), eine Umfangsnut (308) um die Achse A1 aufweist, die die Längsnut (304) kreuzt, wobei der Vorsprung (208) des Stifts (108) ausgelegt ist, um sich zu verschieben, wenn der Stift (108), nachdem er in seiner zurückgezogenen Position angekommen ist, um die Achse A1 gedreht wird, wobei die Umfangsnut (308) den Vorsprung (208) des Stifts (108) in der Längsrichtung blockiert, um die Verschiebung des Stifts (108) entlang der Achse A1 zu verhindern.

3. Kontaktschütz (100) nach Anspruch 1 oder 2, wobei der Stift Folgendes aufweist:
- eine Nut (206), die mit Bezug auf die Achse A1 geneigt und im Stift (108) angebracht ist und außerdem Folgendes umfasst:
- einen Sensor (210), der auf dem Schließzylinder (202) montiert ist, der sich um eine Achse A3 dreht, wobei der Sensor (210) einen Bolzen (212) aufweist, der in die geneigte Nut (206) eingeführt ist, um den Sensor (210) zwischen einer ersten Position, in der der Sensor (210) dem Zugmechanismus (114) ermöglicht, sich von seiner Entriegelungsposition in seine Verriegelungsposition zu verschieben, und einer zweiten Position drehen zu lassen, in der der Sensor (210) verhindert, dass sich der Zugmechanismus (114) aus seiner Entriegelungsposition in seine Verriegelungsposition verschiebt, wenn der Stift (108) zwischen seiner vorgerückten und seiner zurückgezogenen Position gleitet.

4. Kontaktschütz (100) nach Anspruch 3, wobei der Stift (108) einen verlängerten Abschnitt (204) aufweist, in dem die geneigte Nut (206) angeordnet ist.

5. Kontaktschütz (100) nach Anspruch 4, wobei der verlängerte Abschnitt (204) eine Flachstelle aufweist, in der die geneigte Nut (206) angeordnet ist.

6. Kontaktschütz (100) nach einem der Ansprüche 1 bis 5, wobei das Gehäuse (102) eine vordere Seite (104) aufweist, wobei der Stift (108) ein erstes Ende aufweist, das in das Gehäuse (102) über die vordere Seite (104) eingeführt ist, und ein zweites Ende, das nach vorne über die vordere Seite (104) hinaus reicht, an die der Kopf (110) befestigt ist, und außerdem Folgendes umfasst:
- einen Anschlag (306), der verhindert, dass der Stift (108) aus dem Gehäuse (102) nach vorne austritt.

## Claims

1. Contact actuator for motor vehicle (100), comprising:
- a case (102),
- a barrel (202) intended to swivel around an axis A1 with respect to the case (102),
- a pull-strip (114) intended to be moved between a locked position of a steering column and an unlocked position of the steering column, and
- a handle (106) comprising:
- a rod (108) extending according to the axis A1, inserted into the barrel (202) by a first end and intended to slide in the latter between an advanced position wherein the rod (108) enables the possibility for the pull-strip (114) to switch from its unlocked position to its locked position, and a retreated position wherein the rod (108) prevents the pull-strip (114) from switching from its unlocked position to its locked position, with the rod (108) being integral with the barrel (202) in rotation around the axis A1, and
- a head (110) fixed to a second end of the rod (108), with which the handle (106) is intended to be grasped and manipulated, and
the contact actuator (100) being **characterised in that** the case (102) defines an inside space (302) wherein the rod (108) extends, and has, in this inside space (302), a longitudinal groove (304) parallel to the axis A1, and **in that** the rod (108) has a pin (208) intended to be moved in the longitudinal groove (304) when the rod (108) is moved between its advanced position and its retreated position, with the longitudinal groove (304) circumferentially blocking the pin (208) of the rod (108) in such a way as to prevent the rotation of the handle around the axis A1.

2. Contact actuator (100) according to claim 1, wherein the case (102) further has, in the inside space (302), a circumferential groove (308) around the axis A1 that crosses the longitudinal groove (304), wherein the pin (208) of the rod (108) is intended to be moved when the rod (108), once it has arrived in its retreated position, is turned around the axis A1, with the circumferential groove (308) longitudinally blocking the pin (208) of the rod (108) in such a way as to prevent the displacement of the rod (108) along the axis A1.

3. Contact actuator (100) according to claim 1 or 2, wherein the rod has:
- a groove (206) inclined in relation to the axis A1 arranged in the rod (108), and and further comprising:
- a touch probe (210) mounted on the barrel (202) swivelling around an axis A3, with the touch probe (210) having a peg (212) inserted into the inclined groove (206), in such a way as to swivel the touch probe (210) between a first position wherein the touch probe (210) allows the pull-strip (114) to be moved from its unlocked position to its locked position and a second position wherein the touch probe (210) prevents the pull-strip (114) from moving from its unlocked position to its locked position, when the rod (108) slides between its advanced position and its retreated position.

4. Contact actuator (100) according to claim 3, wherein the rod (108) has a widened portion (204) wherein the inclined groove (206) is arranged.

5. Contact actuator (100) according to claim 4, wherein the widened portion (204) has a flat wherein the inclined groove (206) is arranged.

6. Contact actuator (100) according to any of claims 1 to 5, wherein the case (102) has a front surface (104), wherein the rod (108) has a first end inserted into the case (102) through the front surface (104) and a second end extending from the front of the front surface (104), to which the head (110) is fixed, and further comprising:
- an abutment (306) that prevents the rod (108) from exiting outside of the case (102) by the front.
